(19) Europäisches Patentamt
European Patent Office
Office européen des brevets

(11) **EP 2 148 062 A2**

(12) **EUROPEAN PATENT APPLICATION**

(43) Date of publication:
**27.01.2010 Bulletin 2010/04**

(51) Int Cl.:
*F02C 7/04* (2006.01)    *F02K 3/04* (2006.01)

(21) Application number: **09251521.2**

(22) Date of filing: **09.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.07.2008 GB 0813484**

(71) Applicant: **Rolls-Royce plc**
**65 Buckingham Gate**
**London SW1E 6AT (GB)**

(72) Inventors:
• **Smith, Angus Roy**
  **Littleover, Derby DE23 6DX (GB)**
• **Arzoglou, Dimitris**
  **Derby DE23 6AY (GB)**

(74) Representative: **Gunn, Michael Alan**
**Rolls-Royce plc**
**Patents Department**
**P.O. Box 31**
**Derby**
**DE24 8BJ (GB)**

(54) **Gas turbine engine nacelle**

(57)    An initial geometry for a nacelle provides an intake at the upstream end of the nacelle and an exhaust at the downstream end of the nacelle. The intake has, in flow series, an intake lip and a diffuser. The intake lip has a highlight defining the boundary between the inner and outer surfaces of the intake lip. On all longitudinal sections containing the axis of the engine (i) the inner and outer surfaces are tangency matched at the highlight, and (ii) the inner and outer surfaces have their maximum curvatures at the highlight. A method of designing a nacelle for a gas turbine engine includes the steps of: defining such an initial geometry for the nacelle; altering the shape and/or position of the highlight; and obtaining an altered geometry for the nacelle by adjusting surfaces of the intake neighbouring the altered highlight to smoothly blend the altered highlight to unadjusted surfaces of the intake further removed from the altered highlight.

Fig.3

**Description**

The present invention relates to a gas turbine engine nacelle and in particular to a turbofan gas turbine engine nacelle.

A turbofan gas turbine engine nacelle intake is required to supply the fan of the turbofan gas turbine engine with favourably conditioned air during all operational conditions of the turbofan gas turbine engine, irrespective of the aircraft environment and aircraft attitude, whether the aircraft is in flight or on the ground. The nacelle intake may also be required to absorb noise generated by the gas turbine engine.

Prior art nacelle intakes are designed to minimise the pressure loss of the intake at the maximum incidence the aircraft experiences in flight and at the maximum crosswind conditions on the ground. For example, good pressure recovery at high incidence can be achieved by attempting to ensure that the air flow remains attached to the bottom lip of the nacelle intake by drooping down the nacelle highlight and throat relative to the axis of the fan of the turbofan gas turbine engine.

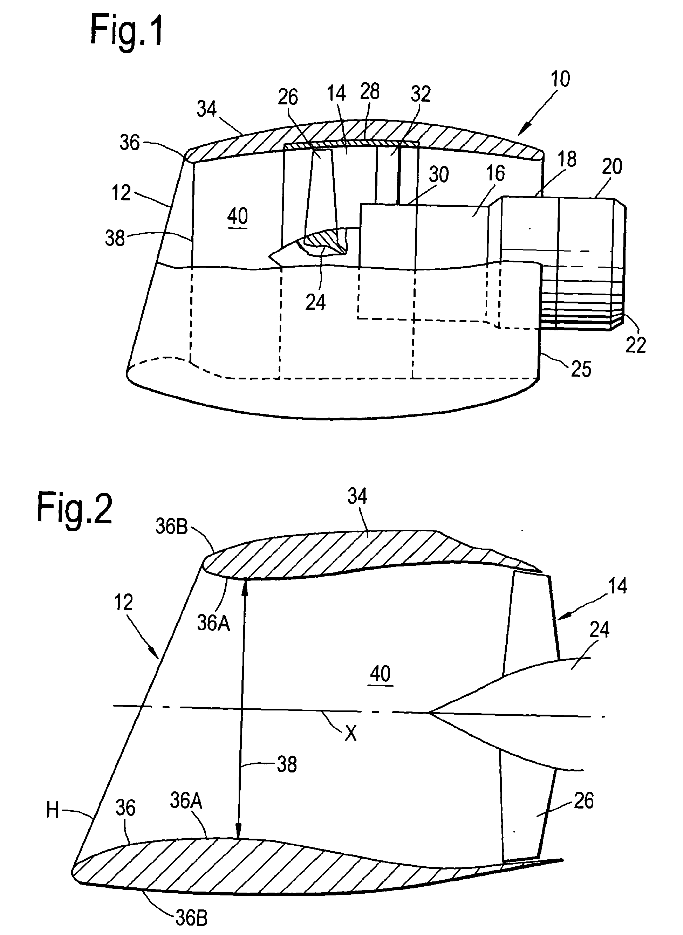

Figure 1 is a partially cut away view of a turbofan gas turbine engine having, in axial flow series, an intake 12, a fan section 14, a compressor section 16, a combustion section 18, a turbine section 20 and an exhaust 22. The fan section 14 comprises a fan disc 24 carrying a plurality of circumferentially spaced radially extending fan blades 26. The fan disc 24 and fan blades 26 are surrounded by a fan casing 28. The fan casing 28 is mounted from the core casing 30 by a plurality of radially extending fan outlet guide vanes 32. The fan section 14 is driven by a turbine in the turbine section 20 via a shaft (not shown). The compressor section 16 is driven by a turbine in the turbine section 20 by a shaft (not shown). The whole of the turbofan gas turbine engine 10 is placed within a nacelle 34.

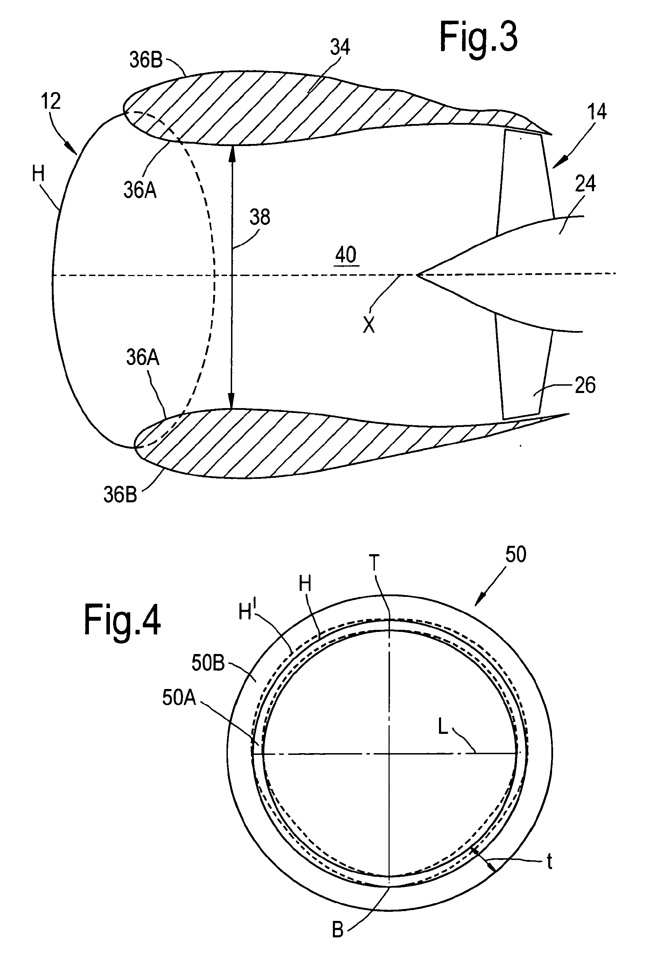

Figures 2 and 3 are respectively enlarged vertical and horizontal longitudinal cross-sections, containing the engine axis X, through the intake of the turbofan gas turbine engine nacelle shown in Figure 1. The nacelle 34 has an intake 12 at its upstream end and an exhaust 25 at its downstream end. The nacelle 34 intake 12 comprises, in flow series, a flared intake lip 36, an intake throat 38 and a diffuser 40 upstream of the fan section 14 of the turbofan gas turbine engine 10. The intake lip 36 forms a contraction for the supply of air to the intake throat 38. The diffuser 40 is arranged to diffuse the air from the intake throat 38 to the fan section 14.

The intake lip has an inner surface 36A and an outer surface 36B. The highlight H is a closed loop running around the intake lip, and defines the boundary between the lip inner and outer surfaces. In Figure 2 the highlight H is viewed edge on and is indicated by a solid line. In Figure 3, the part of the highlight H below the plane of the drawing is indicated by a solid line, and the part above the plane of the drawing is indicated by a dashed line.

Generally, the highlight H lies in a highlight surface which is either planar or is curved in only one principal direction. On longitudinal sections through the engine containing the engine axis, usually the lip inner and outer surfaces are tangency matched at the highlight. Indeed, the lip inner and outer surfaces may be tangential to the highlight surface at the highlight. However, although the curvatures of the inner surface and outer surface are generally at a maximum at the highlight on a longitudinal section, these curvatures may not be the same maximum values. Thus it is typical for the lip to have a discontinuity in curvature across the highlight.

Travelling downstream along the inner surface 36A on a longitudinal section, the end of the inner surface 36A is reached when the tangent to the inner surface becomes 90° relative to the tangent to the inner surface on the same section at the highlight. Generally, on such a section, the curvature of the inner surface 36A decreases continuously in the direction from highlight to the downstream end. The position of the intake throat 38 can be taken to be the downstream end of the inner surface 36A.

US 6708711 proposes a modification to a negatively scarfed intake in which the contraction ratio (effectively the intake lip thickness) is increased at the top centre position (crown) of the intake, reduced at the bottom centre position (keel) of the intake, and left unchanged at the sideline.

A problem with nacelle intakes is that the flow path in the nacelle immediately upstream of the fan may not be symmetric. This can result in an asymmetric flow of air to the fan causing it to operate away from its optimum operating point and hence there is a loss of efficiency. Flow asymmetries may be cause, for example, by crosswinds.

Nacelle intakes may also not be optimised with respect to noise attenuation and other operational considerations.

Accordingly, a first aspect of the present invention provides method of designing a nacelle for a gas turbine engine including the steps of:

defining an initial geometry for a nacelle, the initial geometry providing an intake at the upstream end of the nacelle and an exhaust at the downstream end of the nacelle, wherein the intake has, in flow series, an intake lip and a diffuser, the intake lip having a highlight defining a boundary between the inner and outer surfaces of the intake lip, and on all longitudinal sections through the nacelle that contain the longitudinal axis of the nacelle (i) said inner and outer surfaces having their tangents coincident at the highlight, and (ii) said inner and outer surfaces having their maximum curvatures at the highlight;

altering the shape and/or position of the highlight; and

adjusting surfaces of the intake neighbouring the altered highlight to smoothly blend the altered highlight to unadjusted surfaces of the intake further removed from the altered highlight to obtain an altered geometry for the nacelle. Typically, the defining, altering and obtaining steps are performed on a computer system.

This aspect of the invention allows a designer to exert great control over intake lip geometry, so that specific issues can be addressed, such as noise reduction, reduction in flow asymmetries etc. The method is in contrast to the modifications proposed by US 6708711 in which the highlight shape and position was left unaltered by the changes to the contraction ratio.

Typically, the highlight lies in a highlight surface which is either planar or is curved in only one principal direction (for example in the manner of a cylindrical paraboloid, although other highlight surface shapes which are curved in only one principal direction are possible).

The shape of the highlight may be altered so that in the altered geometry when the highlight is divided into upper and lower portions by a line through its maximum lateral diameter, viewed along the longitudinal axis of the nacelle, an area enclosed by the upper portion of the highlight and the line is greater than an area enclosed by the lower portion of the highlight and the line. This allows area redistribution to be effected without affecting spillage, or impacting wing installation. Indeed, preferably, viewed along the engine axis the area enclosed by the altered highlight is the same as the area enclosed by the highlight of the initial geometry.

Typically, in the initial geometry, the highlight is circular, and the shape of the highlight is altered so that in the altered geometry the highlight is non-circular

A further aspect of the invention provides a method of producing a nacelle for a gas turbine engine, including the steps of:

designing a nacelle according to the method of the previous aspect; and

manufacturing a nacelle having the altered geometry.

Another aspect of the invention provides a nacelle for a gas turbine engine, the nacelle having an intake at the upstream end of the nacelle and an exhaust at the downstream end of the nacelle, and the intake having, in flow series, an intake lip and a diffuser, wherein:

the intake lip has a highlight which is a closed loop defining a boundary between inner and outer surfaces of the intake lip;
on all longitudinal sections through the nacelle that contain a longitudinal axis of the nacelle (i) said inner and outer surfaces having their tangents coincident at the highlight, and (ii) said inner and outer surfaces have their maximum curvatures at the highlight; and when the highlight is divided into upper and lower portions by a line through its maximum lateral diameter, viewed along the longitudinal axis of the nacelle, an area enclosed by the upper portion of the highlight and the line is greater than an area enclosed by the lower portion of the highlight and the line.

Thus the nacelle can be one having an altered geometry designed by the method of the first aspect.

Typically, the highlight lies in a highlight surface which is either planar or is curved in only one principal direction (e.g. in the manner of a cylindrical paraboloid).

A further aspect of the invention provides a gas turbine engine including a nacelle according to the previous aspect.

Embodiments of the invention will now be described by way of example with reference to the accompanying drawings in which:

Figure 1 is a partially cut away view of a known turbofan gas turbine engine;

Figure 2 is an enlarged vertical longitudinal cross-section, containing the engine axis X, through the intake of the turbofan gas turbine engine nacelle shown in Figure 1;

Figure 3 is an enlarged horizontal longitudinal cross-section, containing the engine axis X, through the intake of the turbofan gas turbine engine nacelle shown in Figure 1; and

Figure 4 shows a nacelle intake lip viewed along the engine axis.

Figure 4 shows an unscarfed nacelle intake lip 50 viewed along the engine axis.

The intake lip has a circular highlight H which is the boundary between the inner 50A and the outer 50B surfaces of the intake lip. On longitudinal sections through the engine, the inner and outer surfaces are tangency matched at the highlight, and also have their maximum curvatures at the highlight.

The thickness t of the intake lip is approximately constant around the circumference of the lip.

The intake lip 50 shown in Figure 4 represents a geometry for the nacelle, resulting, for example, from an initial nacelle design procedure.

A next step in the design procedure is to alter the shape and/or position of the highlight. For example, in Figure 4 the altered highlight is indicated by the dashed line H'. Horizontal line L is a line through the maximum lateral diameter of the highlight. In the case of a circular initial highlight, horizontal line L connects the positions at either side of the highlight at which the perpendicular to the highlight is perpendicular to the diameter connecting the top centre (crown) position T on the highlight and the bottom centre (keel) position B on the highlight. On the view of Figure 4, the alteration in this example results in the area enclosed by the upper portion of the highlight and the line L being greater than the area enclosed by the lower portion of the highlight and line L. However, the total area enclosed by the highlight can be unchanged. Further, tangency constraints at the crown and keel may ensure that the highlight and intake do not become heart-shaped. Additionally, the top, bottom and sideline highlight radii can remain unchanged. Thus, the area re-distribution can be achieved without affecting spillage or impacting wing installation.

Any smooth curve expression can be used for the highlight shape. One option is to employ the superellipse

$$\left(\frac{x}{a}\right)^m + \left(\frac{y}{b}\right)^n = c$$

where a, b and c are constants, and m and n vary, for example, between a lower limit of about 1.8 and an upper limit of about 2.3. When a and b are 1, and m and n are 2, a circle of radius of the square root of c is defined. Further, multiple control points (e.g. crown, keel and sideline highlight positions) can be specified.

Having altered the shape and/or position of the highlight, the next step in the design procedure is to adjust the surfaces of the intake neighbouring the altered highlight to smoothly blend the altered highlight to unadjusted surfaces of the intake further removed from the altered highlight. This blending can be performed by methods known to the skilled person. In the example of Figure 4, the blending involves an adjustment of the inner surface 50A of the intake lip which changes the shape of the throat of the nacelle in a way that mirrors the alteration of the shape of the highlight.

Conventionally the highlight shape is defined by internal and external intake surface design choices. The introduction of direct control of the highlight shape allows the redistribution of highlight area without changing lip contraction ratios, highlight radii, or highlight area.

Specific advantages that can be obtained for an intake with a greater flow area in the top half of the intake than in the lower half are:

- Reduction of aerodynamic loading in the upper half of the intake due to ground vortex induced blockage in the lower half of the intake during ground operation.

- Reduction of aerodynamic loading in the upper half of the intake due to low ground clearance effects during ground static operation.

- Reduction of aerodynamic loading in the upwind upper intake quadrant due to low ground clearance effects during ground operation in crosswind.

- Reduction of aerodynamic loading in the upper half of the intake due to bulk flow entering the intake from above the engine centreline, in the case of a negatively scarfed intake.

Highlight shaping also enables the design of intakes in which there is reduced flow asymmetry in the intake duct and diffuser, especially in the forward section of the intake, between the throat and the highlight, with attendant noise benefits and fan face pressure distortion reduction.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A nacelle (34) for a gas turbine engine (10), the nacelle (34) having an intake (12) at an upstream end of the nacelle (34) and an exhaust (22) at a downstream end of the nacelle (34), and the intake (12) having, in flow series, an intake lip (36) and a diffuser (40), wherein:

   the intake lip (36) has a highlight (H) which is a closed loop defining a boundary between inner (36A) and outer (36B) surfaces of the intake lip (36);
   on all longitudinal sections through the nacelle (34) that contain a longitudinal axis (X) of the nacelle (i) said inner and outer surfaces (36A, 36B) have their tangents coincident at the highlight (H), and (ii) said inner and outer surfaces (36A, 36B) have their maximum curvatures at the highlight (H); and
   when the highlight (H) is divided into upper and lower portions by a line through its maximum lateral diameter (L), viewed along the longitudinal axis (X) of the nacelle, an area enclosed by the upper portion of the highlight (H) and said line (L) is greater than an area enclosed by the lower portion of the highlight (H) and said line (L).

2. A nacelle (34) according to claim 1, wherein the highlight (H) lies in a highlight surface (S) which is either planar or is curved in only one principal direction.

3. A gas turbine engine (10) including a nacelle (34) according to claim 1 or 2.

4. A method of designing a nacelle (34) for a gas turbine engine (10) including the steps of:

geometry.

defining an initial geometry for a nacelle (34), the initial geometry providing an intake (12) at an upstream end of the nacelle (34) and an exhaust (22) at a downstream end of the nacelle (34), wherein the intake (12) has, in flow series, an intake lip (36) and a diffuser (40), the intake lip (36) having a highlight (H) defining a boundary between inner (36A) and outer (36B) surfaces of the intake lip (36), and on all longitudinal sections through the nacelle that contain a longitudinal axis (X) of the nacelle (i) said inner and outer surfaces (36A, 36B) having their tangents coincident at the highlight (H), and (ii) said inner and outer surfaces (36A, 36B) having their maximum curvatures at the highlight (H);

altering a shape and/or position of the highlight (H); and

adjusting surfaces of the intake (36) neighbouring the altered highlight (H') to smoothly blend the altered highlight (H') to unadjusted surfaces of the intake (36) further removed from the altered highlight (H') to obtain an altered geometry for the nacelle (34).

5. A method of designing a nacelle (34) according to claim 4, wherein the defining, altering and obtaining steps are performed on a computer system.

6. A method of designing a nacelle (34) according to claim 4 or 5, wherein the highlight (H) lies in a highlight surface (S) which is either planar or is curved in only one principal direction.

7. A method of designing a nacelle (34) according to any one of claims 4 to 6, wherein the shape of the highlight (H) is altered so that in the altered geometry when the highlight (H) is divided into upper and lower portions by a line through its maximum lateral diameter (L), viewed along the longitudinal axis (X) of the nacelle, an area enclosed by the upper portion of the highlight (H) and said line (L) is greater than an area enclosed by the lower portion of the highlight (H) and said line (L).

8. A method of designing a nacelle (34) according to any one of claims 4 to 7, wherein viewed along the longitudinal axis (X) of the nacelle, the area enclosed by the altered highlight (H') is the same as the area enclosed by the highlight (H) of the initial geometry.

9. A method of producing a nacelle (34) for a gas turbine engine (10), including the steps of:

designing a nacelle (34) according to any one of claims 4 to 8; and

manufacturing a nacelle (34) having the altered

Fig.1

Fig.2

# Fig.3

# Fig.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6708711 B